# EUROPEAN PATENT SPECIFICATION

(11) **EP 4 426 900 B1**
(45) Date of publication and mention of the grant of the patent: **01.10.2025**
(21) Application number: 22818970.0
(22) Date of filing: 01.11.2022
(51) Int. Cl.: E02F 9/02, E02F 9/20, E02F 9/26, G06Q 10/20

(54) **SYSTEMS AND METHODS FOR UNDERCARRIAGE WEAR PREDICTION**
SYSTEME UND VERFAHREN ZUR FAHRWERKSVERSCHLEISSVORHERSAGE
SYSTÈMES ET PROCÉDÉS DE PRÉDICTION D'USURE DE TRAIN DE ROULEMENT

(30) Priority: 04.11.2021 US 202117519477
(43) Date of publication of application: 11.09.2024
(73) Proprietor: Caterpillar Inc., Peoria, IL 61629-9510 (US)
(72) Inventor: MHADBI, Nabil, Tampa, FL 33609 (US); YALAMANCHILI, Vijay K., Chicago, IL 60611 (US); EGAWA, Ko, Akashi-sh, Hyogo 674-0065 (JP); SUMIYOSHI, Tetsuya, Akashi-shi, Hyogo 674-0065 (JP); NAITO, Takayuki, Koube-shi, Hyogo 651-2243 (JP)
(74) Representative: Boult Wade Tennant LLP
(86) International application number: PCT/US2022/079018
(87) International publication number: WO 2023/081629

(56) References cited:
- WO-A1-2016/115499
- WO-A1-2020/041897
- JP-B2- 6 333 598
- US-A1- 2017 270 720
- US-A1- 2017 356 164

## Description

### Technical Field

The present technology is directed to systems and methods for wear prediction of undercarriages of machines, vehicles, or other suitable devices. More particularly, systems and methods for wear prediction of components of an undercarriage of a machine or a vehicle based on features derived from a plurality of data objects and/or wear measurements associated with the undercarriage.

### Background

Machines are used to perform various operations in different industries, such as construction, mining, and transportation. Some of these machines can include an undercarriage to support an upper frame. The undercarriage includes various components including ground engaging members which provide propulsion to the machine. Operation of the machines results in wear to the components of the undercarriage. Each component of the undercarriage may undergo various types of wear due to contact with other components and/or a ground surface. However, it can be challenging effectively predicting such wear for a plurality of machines. U. S. Patent Publication No. 20170356164 (Recker) discloses disposing ID tags on a plurality of components of a machine. A controller stores a usage threshold for each component, receives signals from an ID tag reader, and associates an identification number from each ID tag with a component of the machine. The controller determines current usage data for each component based upon the extent of usage of the machine and the previous usage data and compares the current usage data for each component to the usage threshold for each component. Japanese Patent No. JP-6333598 is directed to a processing device that displays an evaluation result for excavators based on cumulative damages in parts of the excavators. It is advantageous to have an improved method and system to address the foregoing needs.

WO 2020/041897 A1 discloses a vehicle comprising a track system which can be monitored to obtain information regarding the vehicle, including information regarding the track system, such as an indication of a physical state of a track and/or other component of the track system based on at least on 3D recognition and/or 2D recognition of image data of a track system component.

US 2017/270720 A1 discloses a wear estimation system for a component of a machine which includes a geolocation unit, a non-transitory computer-readable medium bearing a component wear estimate program, a controller, and an interface device. The geolocation unit is configured to generate a location signal indicative of a location of the machine. The controller is in operable communication with the geolocation unit to receive the location signal therefrom and is configured to execute the component wear estimate program. The interface device is configured to display a graphical user interface of the component wear estimate program. The component wear estimate program is configured to determine an estimated part life for the component based upon an environmental characteristic of the location; to track an actual usage amount for the component; and to indicate, through the graphical user interface, when the usage amount of the component exceeds a threshold percentage of the estimated part life.

WO 2016/115499 A1 discloses a monitoring and maintenance system that utilizes imperial and theoretical data to compare parts, vehicles, users, regions, wear intensity indexes over time and tracking information to provide a sophisticated data collection system for heavy-duty equipment or rental equipment. This tracking is designed to better the specifications, designs, training, preventative maintenance, and replacement wear understanding of fleet management.

### Summary Of The Invention

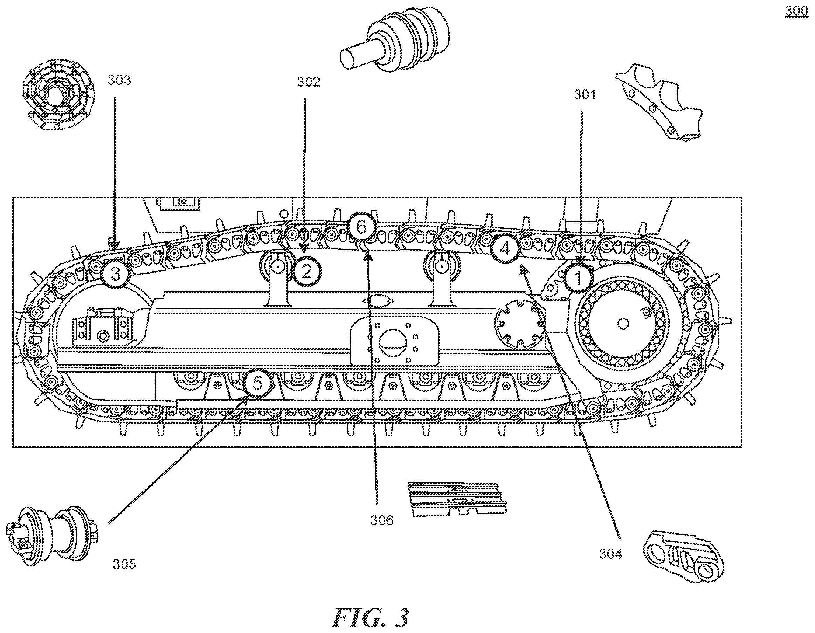

The present technology is directed to systems and methods for wear prediction of an undercarriage of a machine. In some embodiments, the machine can be an excavator or a machine having an undercarriage. The undercarriage can include a track assembly having various components (see, e.g., Fig. 3) such as a sprocket segment, a carrier segment, a track chain, a track link, a track roller, a track shoe, etc. These components can have different life spans and replacement schedules. The present technology collects high frequency time series data from the machine, determines physics-based features based on the collected data, and establishes a statistical model to predict wear to each component of the undercarriage. Historical wear measurements collected during field inspection can also be used to facilitate establishing the statistical model.

The present technology provides a "feature engineering" process for establishing the foregoing statistical model. The "feature engineering" process can include three steps (1) collecting data from input channels (e.g., high frequency time series data channels that are used to communicate with the machine); (2) deriving features or variables based on "physics formulas" (e.g., using a travel mode of the machine and a pump pressure of the machine to determine a drive torque of the machine; using veridical acceleration of the machine to determine a ground condition, etc.); and (3) establishes the statistical model based on the derived features and corresponding coefficients. The coefficients can be determined based on one or more machine learning or training schemes. In some embodiments, the features can be divided into groups based on the correlations of the derived features (e.g., features related to "travel time" of the machine can be divided in the same group). By grouping and analyzing these features, the present technology can effectively predict wear conditions of the components of undercarriages of a plurality of machines (e.g., a fleet of machines in various working sites), enabling efficient management (replacement, maintenance, repair etc.) of these components.

In some embodiments, the present method can be implemented to perform undercarriage wear prediction for a target machine. For example, the method can include (1) receiving wear measurements from a plurality of source machines (e.g., the wear measurements are associated with a first set of components of undercarriages of the plurality of source machines); (2) establishing a statistical model based on the received wear measurements and physic-based features derived from the wear measurements; (3) determining coefficients for the statistical model at least partially based on inspection data of a second set of components of the undercarriage of the target machine; and (4) predicting a wear condition of the undercarriage of the target machine by the statistical model and the coefficients. In some embodiments, the foregoing first and second sets of components can be different sets. In other words, the components that have associated high frequency data (e.g., communicated in various channels) do not have to be the same components as those having inspection data (e.g., from field inspection). Accordingly, the present method can effectively integrate data from different sources (e.g., by the derived features) and provide flexible yet reliable schemes for wear prediction.

### Brief Description Of The Drawings

Non-limiting and non-exhaustive examples are described with reference to the following figures.
Figure 1 is a schematic diagram illustrating a wear prediction system in accordance with embodiments of the present technology.
Figure 2 is a schematic diagram illustrating wear prediction results in accordance with embodiments of the present technology.
Figure 3 is a schematic diagram illustrating components of an undercarriage of a machine in accordance with embodiments of the present technology.
Figure 4 is a schematic diagram illustrating a data structure of jobs performed on parts or components in accordance with embodiments of the present technology.
Figure 5 is a schematic diagram illustrating a data structure of a feature engineering process in accordance with embodiments of the present technology.
Figure 6 is a schematic diagram illustrating components in a computing device in accordance with embodiments of the present technology.
Figure 7 is a flow diagram showing a method in accordance with embodiments of the present technology.

### Detailed Description

Various aspects of the disclosure are described more fully below with reference to the accompanying drawings, which form a part hereof, and which show specific exemplary aspects. Different aspects of the disclosure may be implemented in many different forms and the scope of protection sought should not be construed as limited to the aspects set forth herein. Rather, these aspects are provided so that this disclosure will be thorough and complete, and will fully convey the scope of the aspects to those skilled in the art. Aspects may be practiced as methods, systems, or devices. Accordingly, aspects may take the form of a hardware implementation, an entirely software implementation, or an implementation combining software and hardware aspects. The following detailed description is, therefore, not to be taken in a limiting sense.

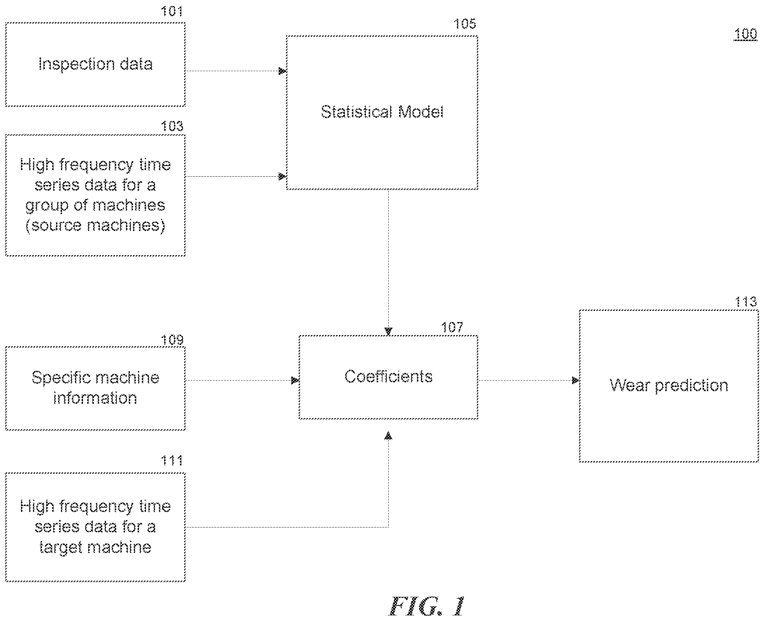

Figure 1 is a schematic diagram illustrating a wear prediction system 100 in accordance with embodiments of the present technology. The system 100 includes inspection data 101 and high frequency time series data 103 (for a group of machines or "source" machines) as input for a statistical model 105. The inspection data 101 and the high frequency time series data 103 are associated with a plurality of components (e.g., Figure 3) of undercarriages of the group of machines. In some embodiments, the inspection data 101 can be from an on-site inspection. In some embodiments, the high frequency time series data 103 can be received from communications channels (e.g., vehicle or machine telematic channels) of the group of machine (e.g., a fleet of machines operated in multiple sites).

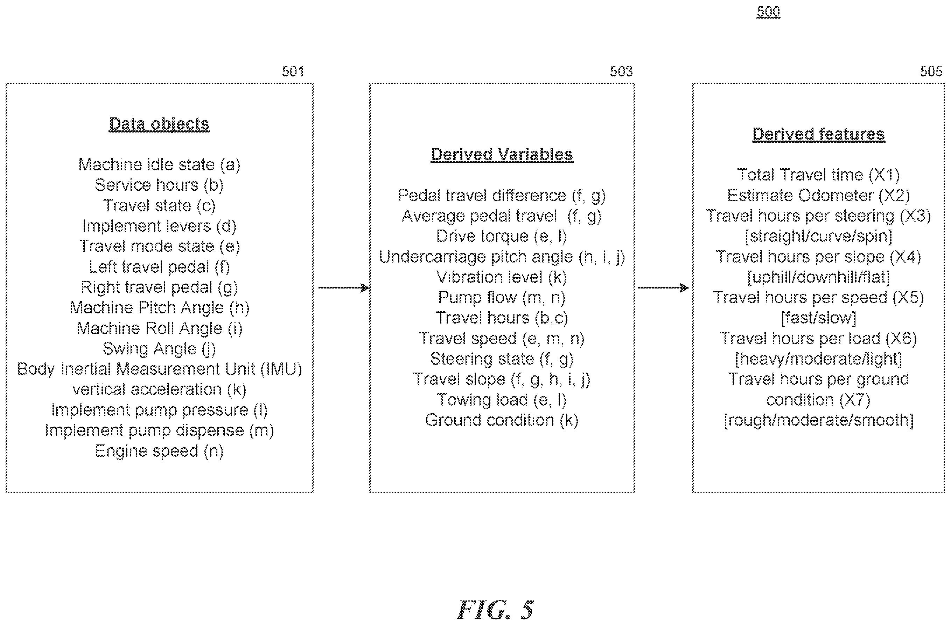

The statistical model 105 can be established and trained based on the inspection data 101 and high frequency time series data 103. Various features corresponding to the components of the undercarriage can be derived and identified based on physics-based formulas (e.g., physics-based relationships among the measurements and/or data objects). The statistical model 105 can generate a plurality of coefficients 107 corresponding to the derived features by one or more machine leaning/training processes. These coefficients 107 can be used to perform a wear prediction process for components of a target machine. Embodiments of the derived features are discussed in detail with reference to Fig. 5.

Referring now to Figure 5, Figure 5 shows a data structure of a feature engineering process 500 in accordance with embodiments of the present technology. The feature engineering process 500 incudes (i) collecting data objects from input channels and/or on-site inspection (block 501); (ii) deriving variables and travel states based on the collected data objects (block 503); and (iii) determining aggregated, derived features based on the variables and travel states (block 505). For each of the derived features, a coefficient can be determined by the statistical model 105.

As shown in Figure 5, examples of the data objects include machine idle state (a), service hours (b), travel state (c), implement levers (d), travel mode state (e), left travel pedal (f), right travel pedal (g), Machine Pitch Angle (h), Machine Roll Angle (i), Swing Angle (j), Body Inertial Measurement Unit (IMU) vertical acceleration (k), implement pump pressure (l), implement pump dispense (m), engine speed (n), etc.

As shown in Figure 5, examples of the derived variables (including travel states) can include pedal travel difference (f, g), average pedal travel (f, g), drive torque (e, l), undercarriage pitch angle (h, i, j), vibration level (k), pump flow (m, n), travel hours (b, c), travel speed (e, m, n), steering state (f, g), travel slope (f, g, h, i, j), towing load (e, l), ground condition (k), etc.

The annotations of the data objects and the deriving variables show correlations among them. These correlations are determined based on physics formulas. For example, the derived variable "pedal travel difference (f, g)" corelates to data objects "left travel pedal (f)" and "right travel pedal (g)." As another example, the derived variable :undercarriage pitch angle (h, i, j)" corelates to data objects "Machine Pitch Angle (h)," "Machine Roll Angle (i)," and "Swing Angle (j)."

In Figure 5, examples of the derived features can include, for example, total travel time (X1), estimate Odometer (X2), travel hours per steering (X3), travel hours per slope (X4), travel hours per speed (X5), travel hours per load (X6), and travel hours per ground condition (X7). In some embodiments, the derived features can include sub-features to describe different conditions.

For example, the travel hours per steering (X3) can have sub-features such as "straight" "curve" and "spin", each of which corresponds to a particular steering condition. The travel hours per slope (X4) can have sub-features such as "uphill" "downhill" and "flat" corresponding to different slope conditions. The travel hours per speed (X5) can have sub-features as "fast" and "slow," which can be defined by an operator in different situations. The travel hours per load (X6) can have sub-features such as "heavy" "moderate" and "light" which can be defined by the operator in different situations. Travel hours per ground condition (X7) can have sub-features such as "rough" "moderate" and "smooth," which can be defined by the operator in various cases.

In some embodiments, the derived features can corelated to one or more derived variables. For example, total travel time (X1) corelates to travel hours (b, c). Estimate Odometer (X2) corelates to travel hours (b, c) and travel speed (e, m, n). Travel hours per steering (X3) corelates to steering state (f, g). Travel hours per slope (X4) corelates to travel slope (f, g, h, i, j). Travel hours per speed (X5) corelates to travel speed (e, m, n). Travel hours per load (X6) corelates to towing load (e, l). Travel hours per ground condition (X7) corelates to ground condition (k).

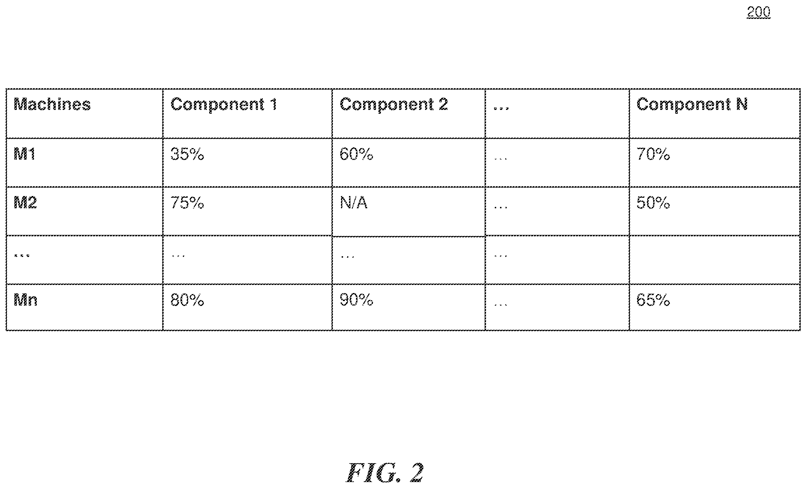

Referring back to Figure 1, based on the foregoing correlations, the statistical model 105 analyzes these correlations and accordingly generates coefficients 107 based on one or more machine learning or training schemes. Once the coefficients 107 are generated, they can be used to perform a wear prediction process of a target machine. The target machine can have an undercarriage that includes at least one common component as the undercarriages of the source machines. The system 100 can retrieve specific machine information 109 (e.g., from field inspection, observation, operator feedback, etc.) and high frequency time series data 111 (e.g., from communication channels) of the target machine, and then generate a wear prediction 113 for the target machine based on the coefficients 107. In some embodiments, the wear prediction 113 can be for a single machine (e.g., the target machine). In other embodiments, the wear prediction 113 can be for a plurality of machines. Embodiments of the wear prediction 113 are further discussed with reference to Figure 2.

Figure 2 is a schematic diagram illustrating a wear prediction result 200 in accordance with embodiments of the present technology. The wear prediction result 200 includes a percentage wear prediction for components 1-N of undercarriages of machines M1-Mn. As shown in Figure 2, component 1 of M1 has wear prediction "35%" (and "100%" indicates a new component). Accordingly the present system can send an alert or reminder to an operator for further process (e.g., to perform an onsite inspection or replacement).

Figure 3 is a schematic diagram illustrating components of an undercarriage 300 of a machine in accordance with embodiments of the present technology. The undercarriage 300 includes components such as a sprocket segment 301, a carrier segment 302, a track chain 303, a track link 304, a track roller 305, and a track shoe 306. The present method can perform a wear prediction process for at least the foregoing components 301-306. In some embodiments, the wear prediction process can be performed on other suitable components of the undercarriage.

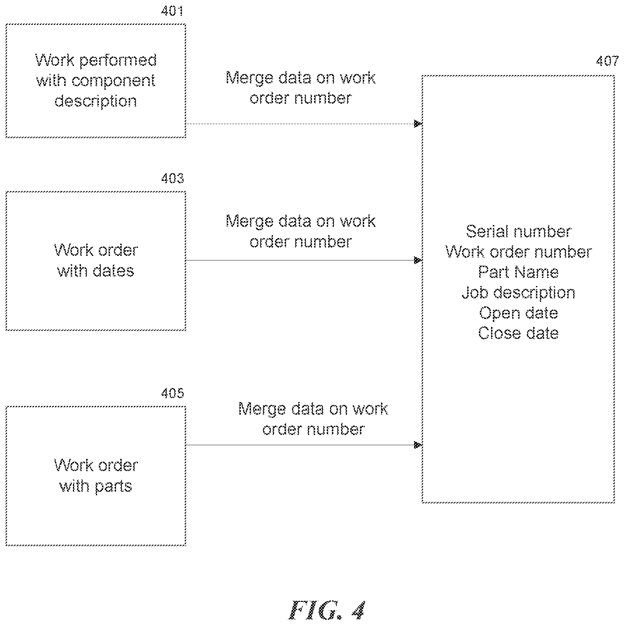

Figure 4 is a schematic diagram illustrating a data structure of jobs performed on parts or components in accordance with embodiments of the present technology. Figure 4 provides a data structure for tracking one or more "jobs" performed on a component. The "jobs" can be tracked with "work orders." Several types of "work-order" based information can be merged into a component tracking data set 407. For example, the "work-order" based information can include a work performed record with component description 401 (e.g., Component C1 has been maintained by process Y; Component C2 has been installed by technician Z, etc.). The "work-order" based information can include work order with dates 403. The work order with dates 403 can include time information regarding the component, such as, Component C1 was inspected on 10:30 a.m. PT, of Date D1; Component C2 was upgraded on 15:45 p.m. PT of Date D2, etc. The "work-order" based information can also include work order with parts information 405. The work order with parts information 405 can include, for example, "components C3-C6 of machine M1-M5 are scheduled to be replaced," "recall information has been received for components C7," "manufacturer of component C8 suggests a replacement after 500 hours of operation," etc. By consolidating the "work-order" based information and store it as the component tracking data set 407, the present technology can effectively manage and then perform the wear prediction process discussed herein. For example, the component tracking data set 407 can serve as inspection data input (e.g., the inspection data 101) for establishing the statistical model 105.

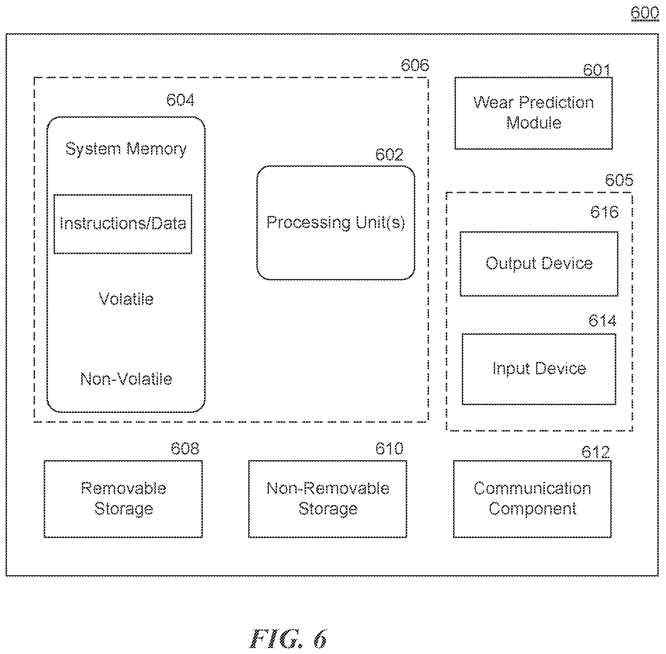

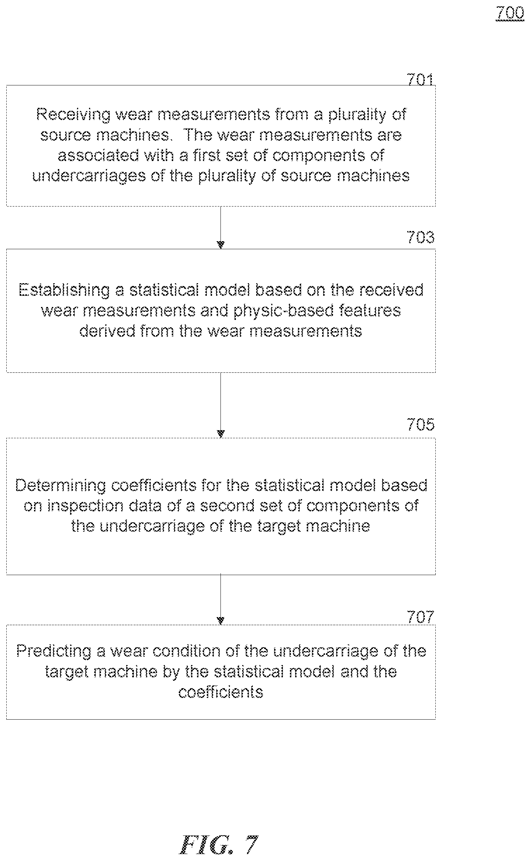

Figure 6 is a schematic diagram illustrating components in a computing device 600 in accordance with embodiments of the present technology. The computing device 600 can be used to implement methods (e.g., Figure 7) discussed herein. Note the computing device 600 is only an example of a suitable computing device and is not intended to suggest any limitation as to the scope of use or functionality. Other well-known computing systems, environments, and/or configurations that may be suitable for use include, but are not limited to, personal computers (PCs), server computers, hand-held or laptop devices, multiprocessor systems, microprocessor-based systems, programmable consumer electronics such as smart phones, network PCs, minicomputers, mainframe computers, distributed computing environments that include any of the above systems or devices, and the like.

In its most basic configuration, the computing device 600 includes at least one processing unit 602 and a memory 604. Depending on the exact configuration and the type of computing device, the memory 604 may be volatile (such as a random-access memory or RAM), non-volatile (such as a read-only memory or ROM, a flash memory, etc.), or some combination of the two. This basic configuration is illustrated in Figure 6 by dashed line 606. Further, the computing device 600 may also include storage devices (a removable storage 608 and/or a non-removable storage 610) including, but not limited to, magnetic or optical disks or tape. Similarly, the computing device 600 can have an input device 614 such as keyboard, mouse, pen, voice input, etc. and/or an output device 616 such as a display, speakers, printer, etc. Also included in the computing device 600 can be one or more communication components 612, such as components for connecting via a local area network (LAN), a wide area network (WAN), cellular telecommunication (e.g. 3G, 4G, 5G, etc.), point to point, any other suitable interface, etc.

The computing device 600 can include a wear prediction module 601 configured to implement methods for operating the machines based on one or more sets of parameters corresponding to components of the machines in various situations and scenarios. For example, the wear prediction module 601 can be configured to implement the wear prediction process discussed herein. In some embodiments, the wear prediction module 601 can be in form of tangibly-stored instructions, software, firmware, as well as a tangible device. In some embodiments, the output device 616 and the input device 614 can be implemented as the integrated user interface 605. The integrated user interface 605 is configured to visually present information associated with inputs and outputs of the machines.

The computing device 600 includes at least some form of computer readable media. The computer readable media can be any available media that can be accessed by the processing unit 602. By way of example, the computer readable media can include computer storage media and communication media. The computer storage media can include volatile and nonvolatile, removable and non-removable media (e.g., removable storage 608 and non-removable storage 610) implemented in any method or technology for storage of information such as computer readable instructions, data structures, program modules or other data. The computer storage media can include, an RAM, an ROM, an electrically erasable programmable read-only memory (EEPROM), a flash memory or other suitable memory, a CD-ROM, digital versatile disks (DVD) or other optical storage, magnetic cassettes, magnetic tape, magnetic disk storage or other magnetic storage devices, or any other tangible medium which can be used to store the desired information.

The computing device 600 includes communication media or component 612, including non-transitory computer readable instructions, data structures, program modules, or other data. The computer readable instructions can be transported in a modulated data signal such as a carrier wave or other transport mechanism and includes any information delivery media. The term "modulated data signal" means a signal that has one or more of its characteristics set or changed in such a manner as to encode information in the signal. By way of example, and not limitation, the communication media can include wired media such as a wired network or direct-wired connection, and wireless media such as acoustic, radio frequency (RF), infrared and other wireless media. Combinations of the any of the above should also be included within the scope of the computer readable media.

The computing device 600 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections can include any method supported by available communications media. Such networking environments are commonplace in offices, enterprise-wide computer networks, intranets and the Internet.

Figure 7 is a flow diagram showing a method 700 in accordance with embodiments of the present technology. The method 700 can be implemented to predict a wear condition of an undercarriage of a machine. The method 700 starts at block 701 by receiving wear measurements from a plurality of source machines. The wear measurements are associated with a first set of components of undercarriages of the plurality of source machines In some embodiments, the wear measurements can include an idle state, service hours, a travel state, a travel mode, a pedal state, a pitch angle, a roll angle, a swing angle, a body inertial measurement unit (IMU) vertical acceleration, a pump pressure, a pump dispensing state, and/or an engine speed.

At block 703, the method 700 continues by establishing a statistical model based on the received wear measurements and physic-based features derived from the wear measurements. In some embodiments, the physic-based features of the target machine include a total travel time, an estimate odometer state, travel hours per steering, travel hours per slope, travel hours per speed, travel hours per load, and/or travel hours per ground condition.

In some embodiments, the physic-based features are determined based on derived variables (e.g., Figure 5) from the wear measurements. In some embodiments, the derived variables from the wear measurements can include a pedal travel difference, an average pedal travel distance, a drive torque, an undercarriage pitch angle, a vibration level, a pump flow, and/or a steering state. In some embodiments, the derived variables from the wear measurements include travel hours, a travel speed, a travel slope, and/or a ground condition.

At block 705, the method 700 continues by determining coefficients for the statistical model based on inspection data of a second set of components of the undercarriage of the target machine. In some embodiments, the coefficients include parameters associated with data objects associated with the wear measurements associated with the first set of components. In some embodiments, the data objects associated with the wear measurements include an idle state, service hours, a travel state, a travel mode, a pedal state, a pitch angle, a roll angle, a swing angle, a vertical acceleration, a pump pressure, a pump dispensing state, and an engine speed.

In some embodiments, the first set of components of undercarriages is the same as the second set of components of the undercarriage. In such embodiments, the undercarriages of the source machines have the same set of components as the undercarriage of the target machine. In some embodiments, the first set of components of undercarriages is more than the second set of components of the undercarriage. In such embodiments, the undercarriages of the source machines have more components than the undercarriage of the target machine.

### Industrial Applicability

The systems and methods described herein can effectively manage components of an undercarriage by performing reliable wear perdition for the components. The methods enable an operator, experienced or inexperienced, to effectively manage and maintain undercarriage components of machines. The present systems and methods can also be implemented to manage multiple industrial machines, vehicles and/or other suitable devices such as excavators, etc.

The above description and drawings are illustrative and are not to be construed as limiting. Numerous specific details are described to provide a thorough understanding of the disclosure. However, in some instances, well-known details are not described in order to avoid obscuring the description. Further, various modifications may be made without deviating from the scope of the embodiments, the invention being defined in the appended claims.

Reference in this specification to "one embodiment" or "an embodiment" means that a particular feature, structure, or characteristic described in connection with the embodiment is included in at least one embodiment of the disclosure. The appearances of the phrase "in one embodiment" (or the like) in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. It will be appreciated that the same thing can be said in more than one way. Consequently, alternative language and synonyms may be used for any one or more of the terms discussed herein, and any special significance is not to be placed upon whether or not a term is elaborated or discussed herein. Synonyms for some terms are provided. A recital of one or more synonyms does not exclude the use of other synonyms. The use of examples anywhere in this specification, including examples of any term discussed herein, is illustrative only and is not intended to further limit the scope and meaning of the disclosure or of any exemplified term. Likewise, the claims are not to be limited to various embodiments given in this specification. Unless otherwise defined, all technical and scientific terms used herein have the same meaning as commonly understood by one of ordinary skill in the art to which this disclosure pertains. In the case of conflict, the present document, including definitions, will control.

As used herein, the term "and/or" when used in the phrase "A and/or B" means "A, or B, or both A and B." A similar manner of interpretation applies to the term "and/or" when used in a list of more than two terms.

The above detailed description of embodiments of the technology are not intended to be exhaustive or to limit the technology to the precise forms disclosed above. Although specific embodiments of, and examples for, the technology are described above for illustrative purposes, various equivalent modifications are possible within the scope of the technology as those skilled in the relevant art will recognize. For example, although steps are presented in a given order, alternative embodiments may perform steps in a different order. The various embodiments described herein may also be combined to provide further embodiments.

From the foregoing, it will be appreciated that specific embodiments of the technology have been described herein for purposes of illustration, but well-known structures and functions have not been shown or described in detail to avoid unnecessarily obscuring the description of the embodiments of the technology. Where the context permits, singular or plural terms may also include the plural or singular term, respectively.

As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. Additionally, the term "comprising" is used throughout to mean including at least the recited feature(s) such that any greater number of the same feature and/or additional types of other features are not precluded, unless context suggests otherwise. It will also be appreciated that specific embodiments have been described herein for purposes of illustration, but that various modifications may be made without deviating from the technology. Further, while advantages associated with some embodiments of the technology have been described in the context of those embodiments, other embodiments may also exhibit such advantages, and not all embodiments need necessarily exhibit such advantages to fall within the scope of the technology. Accordingly, the disclosure and associated technology can encompass other embodiments not expressly shown or described herein. Any listing of features in the claims should not be construed as a Markush grouping.

## Claims

1. A method for wear prediction of an undercarriage (300) of a target machine, the method comprising:
receiving wear measurements from a plurality of source machines, wherein the wear measurements are associated with a first set of components of undercarriages of the plurality of source machines;
establishing a statistical model (105) based on the received wear measurements and physic-based features (505) derived from the wear measurements;
determining coefficients for the statistical model at least partially based on inspection data of a second set of components of the undercarriage of the target machine; and
predicting a wear condition (113 or 200) of the undercarriage of the target machine by the statistical model and the coefficients.

2. The method of claim 1, wherein the wear measurements include an idle state, service hours, a travel state, a travel mode, a pedal state, a pitch angle, a roll angle, a swing angle, a body inertial measurement unit (IMU) vertical acceleration, a pump pressure, a pump dispensing state, and/or an engine speed.

3. The method of claim 1, wherein the physic-based features of the target machine include a total travel time, an estimate odometer state, travel hours per steering, travel hours per slope, travel hours per speed, travel hours per load, and/or travel hours per ground condition.

4. The method of claim 1, wherein the first set of components of undercarriages is the same as the second set of components of the undercarriage.

5. The method of claim 1, wherein the first set of components of undercarriages is more than the second set of components of the undercarriage.

6. The method of claim 1, wherein the physic-based features are determined based on derived variables (503) from the wear measurements.

7. The method of claim 6, wherein the derived variables from the wear measurements include a pedal travel difference, an average pedal travel distance, a drive torque, an undercarriage pitch angle, a vibration level, a pump flow, and/or a steering state.

8. The method of claim 6, wherein the derived variables from the wear measurements include travel hours, a travel speed, a travel slope, and/or a ground condition.

9. The method of claim 1, wherein the coefficients include parameters associated with data objects (501) associated with the wear measurements associated with the first set of components.

10. A system comprising:
a processor (602);
a memory (604) communicably coupled to the processor, the memory comprising computer executable instructions that, when executed by the processor, cause the system to:
receive wear measurements from a plurality of source machines, wherein the wear measurements are associated with a first set of components of undercarriages (300) of the plurality of source machines;
establish a statistical model (105) based on the received wear measurements and physic-based features (505) derived from the wear measurements;
determine coefficients for the statistical model at least partially based on inspection data of a second set of components of the undercarriage of the target machine; and
predict a wear condition (113 or 200) of the undercarriage of the target machine by the statistical model and the coefficients.

## Patentansprüche

1. Verfahren für eine Verschleißvorhersage eines Unterwagens (300) einer Zielmaschine, das Verfahren umfassend:
Empfangen von Verschleißmessungen von einer Vielzahl von Quellmaschinen, wobei die Verschleißmessungen mit einem ersten Satz von Komponenten von Unterwagen der Vielzahl von Quellmaschinen verknüpft sind;
Erstellen eines statistischen Modells (105) basierend auf den empfangenen Verschleißmessungen und physikbasierten Merkmalen (505), die aus den Verschleißmessungen abgeleitet werden;
Bestimmen von Koeffizienten für das statistische Modell, mindestens teilweise basierend auf Inspektionsdaten eines zweiten Satzes von Komponenten des Unterwagens der Zielmaschine; und
Vorhersagen eines Verschleißzustands (113 oder 200) des Unterwagens der Zielmaschine durch das statistische Modell und die Koeffizienten.

2. Verfahren nach Anspruch 1, wobei die Verschleißmessungen einen Leerlaufzustand, Betriebsstunden, einen Fahrzustand, einen Fahrmodus, einen Pedalzustand, einen Nickwinkel, einen Rollwinkel, einen Schwenkwinkel, eine vertikale Beschleunigung einer inertialen Körpermesseinheit (IMU), einen Pumpendruck, einen Pumpenabgabezustand und/oder eine Motordrehzahl einschließen.

3. Verfahren nach Anspruch 1, wobei die physikbasierten Merkmale der Zielmaschine eine Gesamtfahrzeit, einen geschätzten Kilometerzählerstand, Fahrstunden pro Lenkung, Fahrstunden pro Neigung, Fahrstunden pro Geschwindigkeit, Fahrstunden pro Ladung und/oder Fahrstunden pro Bodenbeschaffenheit einschließen.

4. Verfahren nach Anspruch 1, wobei der erste Satz von Komponenten der Unterwagen derselbe wie der zweite Satz von Komponenten der Unterwagen ist.

5. Verfahren nach Anspruch 1, wobei der erste Satz von Komponenten der Unterwagen größer als der zweite Satz von Komponenten der Unterwagen ist.

6. Verfahren nach Anspruch 1, wobei die physikbasierten Merkmale basierend auf abgeleiteter Variablen (503) aus den Verschleißmessungen bestimmt werden.

7. Verfahren nach Anspruch 6, wobei die aus den Verschleißmessungen abgeleiteten Variablen eine Pedalwegdifferenz, eine durchschnittliche Pedalwegdistanz, ein Antriebsdrehmoment, einen Unterwagennickwinkel, einen Vibrationspegel, einen Pumpenfluss und/oder einen Lenkzustand einschließen.

8. Verfahren nach Anspruch 6, wobei die aus den Verschleißmessungen abgeleiteten Variablen Fahrstunden, eine Fahrgeschwindigkeit, eine Fahrneigung und/oder einen Bodenzustand einschließen.

9. Verfahren nach Anspruch 1, wobei die Koeffizienten Parameter einschließen, die mit Datenobjekten (501) verknüpft sind, die mit den Verschleißmessungen verknüpft sind, die mit dem ersten Satz von Komponenten verknüpft sind.

10. System, umfassend:
einen Prozessor (602);
einen Speicher (604), der mit dem Prozessor kommunikationsfähig gekoppelt ist, der Speicher umfassend computerausführbare Anweisungen, die, wenn sie durch den Prozessor ausgeführt werden, das System veranlassen zum:
Empfangen von Verschleißmessungen von einer Vielzahl von Quellmaschinen, wobei die Verschleißmessungen mit einem ersten Satz von Komponenten von Unterwagen (300) der Vielzahl von Quellmaschinen verknüpft sind;
Erstellen eines statistischen Modells (105) basierend auf den empfangenen Verschleißmessungen und physikbasierten Merkmalen (505), die aus den Verschleißmessungen abgeleitet wurden;
Bestimmen von Koeffizienten für das statistische Modell, mindestens teilweise basierend auf Inspektionsdaten eines zweiten Satzes von Komponenten des Unterwagens der Zielmaschine; und
Vorhersagen eines Verschleißzustands (113 oder 200) des Unterwagens der Zielmaschine durch das statistische Modell und die Koeffizienten.

## Revendications

1. Procédé de prédiction d'usure d'un train de roulement (300) d'une machine cible, le procédé comprenant :
la réception de mesures d'usure à partir d'une pluralité de machines sources, dans lequel les mesures d'usure sont associées à un premier ensemble de composants de trains de roulement de la pluralité de machines sources ;
l'établissement d'un modèle statistique (105) sur la base des mesures d'usure reçues et de caractéristiques basée sur la physique (505) dérivées des mesures d'usure ;
la détermination de coefficients pour le modèle statistique en se basant au moins partiellement sur des données d'inspection d'un second ensemble de composants du train de roulement de la machine cible ; et
la prédiction d'une condition d'usure (113 ou 200) du train de roulement de la machine cible par le modèle statistique et les coefficients.

2. Procédé selon la revendication 1, dans lequel les mesures d'usure comportent un état d'inactivité, des heures de service, un état de déplacement, un mode de déplacement, un état de pédale, un angle de pas, un angle de roulis, un angle d'oscillation, une accélération verticale d'unité de mesure inertielle (IMU) de corps, une pression de pompe, un état de distribution de pompe et/ou un régime moteur.

3. Procédé selon la revendication 1, dans lequel les caractéristiques basées sur la physique de la machine cible comportent un temps de déplacement total, une estimation d'état d'odomètre, des heures de déplacement par direction, des heures de déplacement par pente, des heures de déplacement par vitesse, des heures de déplacement par charge et/ou des heures de déplacement par condition du sol.

4. Procédé selon la revendication 1, dans lequel le premier ensemble de composants de trains de roulement est le même que le second ensemble de composants du train de roulement.

5. Procédé selon la revendication 1, dans lequel le premier ensemble de composants de trains de roulement est plus important que le second ensemble de composants du train de roulement.

6. Procédé selon la revendication 1, dans lequel les caractéristiques basées sur la physique sont déterminées sur la base de variables dérivées (503) des mesures d'usure.

7. Procédé selon la revendication 6, dans lequel les variables dérivées des mesures d'usure comportent une différence de déplacement de pédale, une distance moyenne de déplacement de pédale, un couple d'entraînement, un angle de pas de train de roulement, un niveau de vibration, un débit de pompe et/ou un état de direction.

8. Procédé selon la revendication 6, dans lequel les variables dérivées des mesures d'usure comportent des heures de déplacement, une vitesse de déplacement, une pente de déplacement et/ou une condition du sol.

9. Procédé selon la revendication 1, dans lequel les coefficients comportent des paramètres associés aux objets de données (501) associés aux mesures d'usure associées au premier ensemble de composants.

10. Système comprenant :
un processeur (602) ;
une mémoire (604) couplée en communication au processeur, la mémoire comprenant des instructions exécutables par ordinateur qui, lorsqu'elles sont exécutées par le processeur, amènent le système à :
recevoir des mesures d'usure à partir d'une pluralité de machines sources, dans lequel les mesures d'usure sont associées à un premier ensemble de composants de trains de roulement (300) de la pluralité de machines sources ;
établir un modèle statistique (105) sur la base des mesures d'usure reçues et des caractéristiques basées sur la physique (505) dérivées des mesures d'usure ;
déterminer des coefficients pour le modèle statistique en se basant au moins partiellement sur des données d'inspection d'un second ensemble de composants du train de roulement de la machine cible ; et
prédire une condition d'usure (113 ou 200) du train de roulement de la machine cible par le modèle statistique et les coefficients.
